Europäisches Patentamt

European Patent Office

Office européen des brevets

(11) Veröffentlichungsnummer: **0 283 852 B1**

# EUROPÄISCHE PATENTSCHRIFT

(45) Veröffentlichungstag der Patentschrift: 29.05.91

(51) Int. Cl.5: **C09C 1/24**, C09C 1/00

(21) Anmeldenummer: 88103691.7

(22) Anmeldetag: 09.03.88

(54) **Plättchenförmige Pigmente auf Basis Eisenoxid.**

(30) Priorität: 20.03.87 DE 3709217

(43) Veröffentlichungstag der Anmeldung:
28.09.88 Patentblatt 88/39

(45) Bekanntmachung des Hinweises auf die
Patenterteilung:
29.05.91 Patentblatt 91/22

(84) Benannte Vertragsstaaten:
BE DE FR GB IT NL

(56) Entgegenhaltungen:
EP-A- 0 014 382
EP-A- 0 176 919
EP-A- 0 268 072

JOURNAL OF SCIENTIFIC AND INDUSTRIAL
RESEARCH, Januar 1977, Band 36, Nr. 1, Seiten 25-31, New Delhi; A. SURYANARAYANA
et al.: "Iron Oxide Pigments: part II - methods for preparation of synthetic yellow,
black and brown iron oxides"

(73) Patentinhaber: **BASF Aktiengesellschaft**
**Carl-Bosch-Strasse 38**
**W-6700 Ludwigshafen(DE)**

(72) Erfinder: **Ostertag, Werner, Dr.**
**Oberer-Bergel-Weg 2**
**W-6718 Gruenstadt(DE)**
Erfinder: **Mronga, Norbert, Dr.**
**Ringstrasse 2**
**W-6901 Dossenheim(DE)**

**Beschreibung**

Die vorliegende Erfindung betrifft Effektpigmente, die durch Reduktion von hydrothermal hergestellten plättchenförmigen $Mn_xAl_yFe_{2-(x+y)}O_3$-Pigmenten entstehen.

Die optische Wirkung der Effekt- oder Glanzpigmente beruht auf gerichteter Reflexion an flächig ausgebildeten, ausgerichteten, stark lichtbrechenden Pigmentpartikeln. Der mittlere Partikeldurchmesser der Effekt- bzw. Glanzpigmente ist weit größer als derjenige von Pigmenten deren Wirkung auf Streuung und Absorption beruht. Er bestimmt die Art des Effektes, der für Plättchen mit kleinerem Durchmesser "seidig weich" erscheint, für Plättchen mit größerem Durchmesser in charakteristischer Weise glitzert.

Effektpigmente können metallischer, oder oxidischer Natur sein. Altbekannt sind plättchenförmige Aluminiumpigmente. Effektpigmente auf oxidischer Basis finden neuerdings zunehmendes Interesse, beispielsweise für Automobillackierungen, wo sie eine optisch attraktive Alternative zu den seit langem bekannten plättchenförmigen Aluminiumpigmenten darstellen. Auch für Kunststoffeinfärbungen, beim Druck oder in der Kosmetik, d. h. in allen Bereichen in denen hoher Glanz erwünscht ist, finden oxidische Effektpigmente Verwendung. Oxidische Effektpigmente sind beispielsweise auf hydrothermalem Wege hergestellte plättchenförmige Eisenoxid- bzw. Eisenoxidmischphasen-Pigmente, bei denen die Pigmentpartikel Einkristallcharakter haben. Seit langem bekannt unter den oxidischen Effektpigmenten sind auch die mit einem hochbrechenden Material beschichteten Glimmerschuppenpigmente, die als Perlglanzpigmente bezeichnet werden.

Neben bunten sind auch wenig bunte oder gar unbunte Effektpigmente, insbesondere schwarze oder schwärzlich aussehende Effektpigmente von Interesse. Dies gilt vor allem für Anwendungen im Automobilbereich, in dem von Lack-Stylisten die sogenannte "schwarze Perle" gesucht ist, aber auch in der Kosmetik, im keramischen Sektor, für Kunststoffpigmentierungen und dekorative Beschichtungen.

Es hat nicht an Versuchen gefehlt, schwarze bzw. dunkle Effektpigmente herzustellen.

So werden in der DE-C 23 13 331 mit polykristallinen Magnetitschichten belegte Glimmerschuppenpigmente beschrieben, die je nach Beschichtungsdicke "mausgrau" bis schwarz aussehen. Aufgrund dem polykristallinen Aufbaus der Beschichtung zeigen solche Effektpigmente jedoch nicht den Glanz und die Oberflächeneigenschaften von hydrothermal synthetisierten plättchenförmigen Pigmenten, bei denen die glatten Kristallflächen der im wesentlich einkristallinen Partikel optisch zur Wirkung kommen.

Analoges gilt für die in der DE-A 3 433 657 beschriebenen mit einer reduzierten $TiO_2$-Schicht belegten Glimmerschuppenpigmente.

In der EP-C 14 382 werden Produkte mit der Struktur des Magnetits und Maghemits erwähnt, die sich aus hydrothermal synthetisierten, mit den Elementen der IV., V. und VI. Hauptgruppe und/oder der II. Nebengruppe des Periodensystems dotierten Hematit "Vorläufer"-Kristallen herstellen lassen. Allerdings weisen diese Vorläuferkristalle nur kleine mittlere Durchmesser auf, so daß der sogenannte "Sparkle-Effekt", bei dem das unbewaffnete Auge in der Beschichtung die Einzelpartikel zu erkennen vermag, nicht ohne weiteres bzw. überhaupt nicht erreichbar ist. Dies gilt im wesentlichen auch für die nach DE-A 34 40 911 beschriebenen, über komplizierte Keimbildungsverfahren etwas vergrößerten Vorläuferkristalle.

In der EP-A 0 176 919 wird ein Verfahren zur Herstellung feinteiliger Ferritpulver mit im wesentlichen isotroper Teilchenform der allgemeinen Formel $M(II)_xFe(II)_{1-x}Fe(III)_2O_4$ beschrieben, in der M = Mg, Mn, Co, Ni, Cu und/oder Zn und X 0 bis 1 bedeutet. Bei diesen Pigmenten handelt es sich wegen ihrer isotropen Teilchenform nicht um Effektpigmente.

In der nicht veröffentlichten europäischen Patentanmeldung 87 115 379.7 werden plättchenförmige Pigmente auf Basis der allgemeinen Formel $Mn_xAl_yFe_{2-(x+y)}O_3$ beschrieben, in der x einen Wert von 0,01- 0,06 und y einen Wert von 0-0,2 hat. Diese Mischphasenoxidpigmente kristallisieren im Gitter des Hämatits. Sie lassen sich auf einfache Weise in einem hydrothermalen Verfahren herstellen, indem man eine wäßrige Suspension von Eisen(III)-hydroxid bzw. -oxidhydrat in Gegenwart von Alkalihydroxiden oder -carbonaten und in Gegenwart von im Reaktionsmedium löslichen Manganverbindungen einer Behandlung bei Temperaturen oberhalb von 120°C, vorzugsweise 250-360°C, unterwirft. Überraschenderweise wird hierbei Mangan in das sich bildende plättchenförmige ternäre Oxidmischphasenpigment der allgemeinen Formel $Mn_xAl_yFe_{2-(x+y)}O_3$ eingebaut.

Als im Reaktionsmedium lösliche Manganverbindungen kommen die Verbindungen des sechswertigen und insbesondere des siebenwertigen Mangans, z.B. Kaliumpermanganat in Betracht.

Als Eisenhydroxid bzw. -oxidhydrat kommt neben dem gelartigen $Fe(OH)_3$ auch das $\alpha$-FeOOH und $\gamma$-FeOOH in Frage. Die Konzentration bzw. der Feststoffgehalt der Suspension wird zweckmäßig so gewählt, daß die Suspensionen sich ohne Schwierigkeiten technisch handhaben lassen; im allgemeinen enthalten die Suspensionen, bezogen auf Wasser, 1 bis 20, vorzugsweise 1 bis 10 Gew.-% Eisenhydroxid bzw. -oxidhydrate.

Die Mengen der im Reaktionsmedium löslichen Manganverbindungen werden so gewählt, daß das Atomverhältnis Mn:Fe mindestens dem Atomverhältnis des herzustellenden Pigmentes entspricht. Grundsätzlich ist festzustellen, daß mit steigender Mangankonzentration in der Suspension - sonst gleiche Reaktionsbedingungen vorausgesetzt - nicht nur der Mangangehalt im fertigen Pigment steigt, sondern auch der mittlere Teilchendurchmesser der Pigmente bei etwa gleichbleibendem Durchmesser-Dicken-Verhältnis steigt. Man hat es so in der Hand durch Wahl der Konzentration der Manganverbindung in der Suspension gezielt Pigmente mit einem jeweils gewünschten Teilchendurchmesser herzustellen, der zwischen 6 und 65 µm variiert werden kann.

Für den Fall, daß die Pigmente auch Aluminium enthalten sollen, setzt man Suspensionen ein, die Alkalialuminate enthalten. Selbstverständlich muß dieses nicht als solches eingesetzt werden, sondern es können auch Aluminiumoxid, das unter den hydrothermalen Bedingungen in Alkalialuminat übergeführt wird, sowie Aluminiumoxidhydrate eingesetzt werden. Das Al:Fe-Atomverhältnis in den einzusetzenden Reaktanden muß, wie beim Mn/Fe-Verhältnis mindestens ebenfalls dem Al/Fe-Atomverhältnis des herzustellenden Pigmentes entsprechen.

Die metallisch glänzenden Pigmente haben bei kleinen Partikeldurchmessern um 10 µm eine rötlichgelbe Farbe, die sich mit steigendem Durchmesser nach violett verschiebt.

Der vorliegenden Erfindung lag die Aufgabe zugrunde, dunkle bzw. schwarze hochglänzende plättchenförmige Effektpigmente und ein Verfahren zu deren Herstellung bereitzustellen, die einen hohen Formfaktor, d.h. ein hohes Durchmesser-Dicken-Verhältnis, mittlere Partikelgrößen zwischen 5 und 60 µm aufweisen und in ihrer Farbtiefe sowie im Farbton durch die Herstellungsbedingungen variabel einstellbar sind.

Es wurde gefunden, daß diese Aufgabe durch plättchenförmige Mischphasenpigmente mit Spinellstruktur der Zusammensetzung $Mn_uAl_vFe_{3-[(u+v)]-z}O_4$ wobei u Werte von 0,01-0,09, v Werte von 0-0,3 und z Werte von 0-1 haben, gelöst wird.

Die erfindungsgemäßen Pigmente lassen sich durch Rekuktion der in der europäischen Patentanmeldung 87 115 379.7 beschriebenen Pigmente der allgemeinen Formel $Mn_xAl_yFe_{2-(x+y)}O_3$ herstellen. Die erfindungsgemäßen Pigmente sind bei vollständiger Reduktion strukturell einheitlich und kristallisieren im Gitter des Spinells, bei unvollständiger Reduktion sind sie zweiphasig, wobei sich an der Oberfläche der Partikel die Spinellstruktur der reduzierten Phase, im Kern der Pigmentpartikel die Hematitstruktur des Ausgangsmaterials befindet.

Überraschenderweise bleibt die äußere Form, d.h. der Habitus der Partikel trotz einer mit der Reduktion verbundenen Gitteränderung erhalten. Die Plättchengröße und Form der erfindungsgemäßen Pigmente sind durch das als Ausgangsprodukt dienende $Mn_xAl_yFe_{2-(x+y)}O_3$-Pigment festgelegt und lassen sich durch die Herstellungsbedingungen dieses Pigmentes gezielt einstellen.

Bei der Herstellung der erfindungsgemäßen Pigmente geht man von den in der europäischen Patentanmeldung 87 115 379.7 beschriebenen Pigmenten der allgemeinen Formel $Mn_xAl_yFe_{2-(x+y)}O_3$ aus, wobei durch Variation der Herstellungsbedingungen Ausgangspigmente mit gezielt einstellbarer Plättchendimension und -Form hergestellt werden. Diese Pigmente werden bei erhöhter Temperatur einer Behandlung mit reduzierenden Gasen bzw. bei der Behandlungstemperatur dampfförmig vorliegender Verbindungen unterworfen. Als reduzierende Gase kommen neben insbesondere Wasserstoff auch Ammoniak, Kohlenmonoxid, Methan sowie andere gasförmige Kohlenwasserstoffe oder Alkohole in Betracht. Der Temperaturbereich für die Reduktion erstreckt sich von 200°C bis zu sehr hohen Temperaturen von über 1200°C. Der obere Temperaturbereich ist im wesentlichen nur durch die Belastbarkeitsgrenze der Reduktionsbehältnisse bestimmt. Zweckmäßigerweise wird die Reduktion bei Temperaturen zwischen 300 und 800°C durchgeführt. Damit die Reduktion bei der Spinellphase mit dem Grenzwert der Zusammensetzung $Mn_uAl_vFe_{[3-(u+v)]}O_4$ mit Sicherheit zum Stillstand kommt und nicht darüber hinaus zu niederen Oxiden oder gar zum Metall führt, wird dem Reduktionsgas zweckmäßig Wasserdampf zugegeben und zwar umso mehr je höher die Temperatur der Reduktion ist. Im allgemeinen genügt es, einen z.B. bei Temperaturen von 20 bis 85°C mit Wasserdampf gesättigten Reduktionsgasstrom einzusetzen. Eine Überreduktion ist schon alleine aus dem Grund zu vermeiden, da z.B. eine Reduktion bis zur metallischen Phase leicht zum Zerbrechen der Pigmente führen kann. Um dies zu vermeiden, ist es ferner wesentlich, daß die Reduktion unter möglichst geringer mechanischer Beanspruchung des Pigmentes durchgeführt wird.

Je nach der Größe der eingesetzten Ausgangspigmente und der Dauer der Reduktion erhält man Pigmente, die durchreagiert sind, d.h. sie weisen ausschließlich Spinellstruktur auf mit der Zusammensetzung $Mn_uAl_vFe_{[3-(u+v)]}O_4$ oder sie sind nicht durchreagiert und man erhält zweiphasige Pigmente, die nur an ihrer Oberfläche Spinellstruktur der genannten Zusammensetzung besitzen, während der unreagierte Kern die Hematitstruktur des Ausgangspigmentes aufweist mit der Zusammensetzung $Mn_xAl_yFe_{2-(x+y)}O_3$.

Der Grad der Reduktion läßt sich über die Parameter Reduktionstemperatur und Reduktionsdauer gezielt einstellen. Bei hoher Reduktionstemperatur erfolgt die Reduktion rascher. Bei der Herstellung von

3

Zweiphasenpigmenten wählt man zweckmäßigerweise nicht allzu hohe Reduktionstemperaturen, da bei tieferen Reduktionstemperaturen der Reduktionsgrad besser kontrollierbar ist.

Zu plättchenförmigen Pigmenten mit Spinellstruktur der Zusammensetzung $Mn_u Al_v Fe_{[3-(u+v)]-z} O_{4-z}$, bei der z Werte von > 0 bis 1 hat, kann man nur schwer durch direkte Reduktion gelangen. Zur Herstellung dieses Pigmenttyps geht man bevorzugt von durchreagierten Pigmenten aus und behandelt sie schonend bei Temperaturen von 150 bis 400° C mit Luft, die gegebenenfalls mit weiterem Stickstoff versetzt ist, so daß ihr $O_2$-Gehalt < 20 Vol.% ist. Die Oxidation kann so weit geführt werden, daß schließlich wieder ein Produkt erhalten wird, das bezüglich seiner Zusammensetzung dem Ausgangspigment entspricht, das aber anstelle von Hematitstruktur Maghemitstruktur aufweist. Maghemit ist strukturell ebenfalls ein Spinell.

Neben einer gezielt einstellbaren Partikelgröße weisen die erfindungsgemäßen Pigmente den Vorteil eines variablen Farbtons und einer variablen Farbtiefe auf. Bekanntlich wirken bei Schwarzpigmenten auf Eisenoxidbais Mn-Zusätze farbvertiefend, während Al-Zusätze aufhellend wirken. Farbton- und Farbtiefevariationen lassen sich überdies über Partikelgrößenvariation und in großer Vielfalt über einen unterschiedlich weitgehenden Reduktionsgrad erzielen. So weisen die bereits charakterisierten Zweiphasenpigmente bei geringer Dicke der äußeren Spinellschicht einen anderen Farbton auf als bei größerer Dicke. Solche Variationen in Farbton und Farbtiefe sind in allen Bereichen der dekorativen Beschichtungen und in der Kosmetik besonders erwünscht. Die erfindungsgemäßen Pigmente können hier allein, als Träger von Beschichtungen, oder in Abmischung mit anderen Farb- oder Effektpigmenten eingesetzt werden. Besonders für Abmischungen mit anderen Farb- oder Effektpigmenten ist eine Farbton- und Farbtiefaveriationsbreite der erfindungsgemäßen Effektpigmente erwünscht, da ihr unterschiedliches spektrales Absorptionsvermögen eine deutliche Variation des optischen Gesamteindruckes ermöglicht.

Die erfindungsgemäßen Pigmente sind jedoch nicht nur wegen ihrer optischen Eigenschaften interessant. Sie zeigen auch elektrische und magnetische Eigenschaften, die ihnen in zahlreichen technischen Bereichen Anwendungsmöglichkeiten eröffnen.

Solche technischen Anwendungsbereiche finden sich z.B. bei der elektromagnetischen Abschirmung mit Pigmenten, weiterhin bei der solaren Energiegewinnung, bei magnetischen Datenträgern und bei magnetischen Werkstoffen wie Plastoferriten.

Durch Beschichtung der erfindungsgemäßen Produkte mit hochbrechenden Oxiden wie $TiO_2$ oder $Fe_2O_3$ lassen sich weitere coloristisch interessante Effektpigmente herstellen.

Die folgenden Beispiele erläutern die Erfindung in weiteren Details. Sofern nicht anders angegeben, beziehen sich Prozentangaben auf Gewichtsprozente.

A) Herstellung des $Mn_x Al_y Fe_{2-(x+y)} O_3$-Ausgangspigmentes

Beispiel A1

Eine gut gerührte Mischung aus 9,37 g $\alpha$-FeOOH, das durch die Oxidation von $FeSO_4$ mit Luft in einem Zweistufenverfahren hergestellt worden ist und dessen BET-Oberfläche 42 m²/g beträgt, 6,98 g $Al(OH)_3$, 6,05 g NaOH und 150 g $H_2O$ wird mit 1,33 g/l $KMnO_4$ versetzt und in einem 300 ml fassenden elektrisch beheizten Rührautoklaven unter Rühren in 30 min auf 220 °C (Aufheizphase) und dann in weiteren 30 min auf 305 °C (Reaktionsphase) gebracht. Anschließend wird innerhalb von 10 Minuten auf Temperaturen unter 100 °C abgekühlt. Das feste Reaktionsprodukt wird von der alkalischen Lösung abgetrennt, mit heißem Wasser gewaschen und im Trockenschrank bei 110 °C getrocknet. Das erhaltene Pigment hat eine dunkelviolette Farbe, starken Glanz und besteht aus plättchenförmigen Kristallen mit glatten Kristallflächen wie aus rasterelektronenmikroskopischen Aufnahmen hervorgeht.

Über Cilas-Laserstrahlbeugungs-Granulometrie wird der mittlere Partikeldurchmesser mit 18 $\mu$ bestimmt. Die mittlere Plättchendicke wird aus Messungen der spezifischen freien Oberfläche (BET-Wert) des Pigmentes mit 0,2 $\mu$ ermittelt. Hieraus errechnet sich ein Durchmesser zu Dickenverhältnis der Plättchen von 90.

Naßchemische analytische Untersuchungen ergeben, daß das Pigment einen Mn-Gehalt von 1,2 %, eine Al-Gehalt von 2,2 % und einen Fe-Gehalt von 65,5 % aufweist. Hieraus errechnet sich eine Pigmentzusammensetzung entsprechend der Formel $Mn_{0,034} Al_{0,128} Fe_{1,838} O_3$. Aus Röntgenaufnahmen geht hervor, daß das Produkt einphasig vorliegt und Haematitstruktur hat.

Beispiel A2

Eine Mischung aus 9,5 g α-FeOOH mit einer BET Oberfläche von 45 m$^2$/g, das durch Oxidation einer wässrigen FeSO$_4$-Lösung in einem Zweistufenverfahren hergestellt worden ist, 8,48 NaAlO$_2$ , 4,2 g KOH, 0,15 g KMnO$_4$ und 150 g H$_2$O wird in einem 300 ml fassenden elektrisch beheizten Autoklaven unter Rühren in 30 min auf 310 °C erhitzt. Nach einer Verweilzeit von 10 min wird abgekühlt. Das plättchenförmige feste Reaktionsprodukt wird von der wässrigen Lösung abgetrennt, mit heißem Wasser gewaschen und bei 105 °C im Trockenschrank getrocknet.

Das erhaltene Pigment hat eine braungelbe Farbe, zeigt metallischen Glanz und besteht aus plättchenförmigen Kristallen. Rasterelektronenmikroskopische Aufnahmen zeigen glatte, saubere Kristallflächen der Einzelkristalle. Der mittlere Durchmesser der Kristallinen Partikel beträgt 10 μ die spezifische Oberfläche (BET-Wert) 3,8 m$^2$/g woraus sich eine mittlere Partikeldicke von 0,1 μ errechnet.

Analytische Untersuchungen ergeben eine chemische Zusammensetzung des Produktes entsprechend der Formel Mn$_{0,02}$Al$_{0,18}$Fe$_{1,80}$O$_3$. Aus Röntgenaufnahmen geht hervor, daß das Produkt einphasig vorliegt und die Röntgenlinien von Haematit aufweist.

Beispiel A3

Eine Mischung aus 10 g α-FeOOH, das durch Oxidation einer wässrigen FeSO$_4$-Lösung mit Luft nach dem Zweistufenverfahren hergestellt worden ist und eine BET-Oberfläche von 43 m$^2$/g aufweist, wird 7,0 g Al(OH)$_3$, 6,0 g NaOH, 0,40 g KMnO$_4$ und 155 ml H$_2$O innig gemischt und in einem 300 ml Rührautoklaven unter Rühren über 30 min auf 225 °C und in weiteren 30 min auf 310 °C erhitzt. Anschließend wird abgekühlt. Das Reaktionsprodukt wird durch Filtrieren von der wässrigen Lösung abgetrennt, mit heißem Wasser gewaschen und bei 105 °C im Trockenschrank getrocknet.

Das erhaltene Pigment hat eine dunkelviolette Farbe. Für das unbewaffnete Auge sind im Pulver glitzernde Einzelkristalle erkennbar. Rasterelektronenmikroskopische Aufnahmen zeigen wohlkristallisierte Plättchen mit einem hohen Durchmesser- zu Dickenverhältnis. Cilas-Messungen ergeben einen mittleren Durchmesser der Partikel von 34,1 μ. Aus dem BET-Wert von 0,95 m$^2$/g errechnet sich eine mittlere Dicke der Partikel von 0,4 μ.

Analytische Untersuchungen ergaben eine Zusammensetzung des Pigmentes, die der Formel Mn$_{0,05}$Al$_{0,15}$Fe$_{1,80}$O$_3$. Röntgenaufnahmen zeigen ein einphasig kristallisierendes Produkt, das die Beugungslinien des Haematits zeigt.

Beispiele A4 bis A10

Die Beispiele A4 - A20 werden analog Beispiel 1 mit den in der Tabelle 1 augeführten Reaktanden-Mengen durchgeführt. Hierbei wird bei allen Beispielen in 30 min von Raumtemperatur bis auf 220 °C hochgeheizt. Anschließend wird - wie in Beispiel A1 - über weitere 30 min auf 305 °C aufgeheizt und dann ohne zusätzliche Verweildauer an der Luft abgekühlt. In den Beispielen A9 und A10 wird nach der 30-minütigen Aufheizzeit auf 305 °C eine weitere Verweildauer von 30 min bei 305 °C vor dem Abkühlen eingehalten. Die Ergebnisse der Versuche sind in Tabelle 1 zusammengefaßt. Sämtliche Reaktionsprodukte sind plättchenförmig wie aus REM-Aufnahmen hervorgeht und haben das Röntgenbild von Haematit.

Tabelle 1: Plättchenförmige $Mn_xAl_yFe_{2-(x+y)}O_3$-Pigmente

| Bei-spiel | Einwaage in g | | | | | Produkt-Zusammensetzung | Pigment-plättchen | | |
|---|---|---|---|---|---|---|---|---|---|
| | FeOOH | Al(OH)$_3$ | NaOH | KMnO$_4$ | H$_2$O | | V($\mu$)[1] | d($\mu$)[2] | V/d |
| A4 | 6,25 | 6,98 | 6,0 | 0,08 | 150 | $Mn_{0,012} Al_{0,16} Fe_{1,828} O_3$ | 8,0 | 0,08 | 100 |
| A5 | 6,03 | 5,32 | 4,1 | 0,18 | 100 | $Mn_{0,03} Al_{0,18} Fe_{1,79} O_3$ | 28,0 | 0,29 | 96 |
| A6 | 6,25 | 6,98 | 6,0 | 0,50 | 150 | $Mn_{0,057} Al_{0,14} Fe_{1,803} O_3$ | 44,0 | 0,44 | 100 |
| A7 | 6,25 | 4,31 | 6,0 | 0,12 | 150 | $Mn_{0,020} Al_{0,08} Fe_{1,900} O_3$ | 12,2 | 0,30 | 41 |
| A8 | 6,25 | 0,20 | 6,0 | 0,11 | 150 | $Mn_{0,019} Al_{0,005} Fe_{1,976} O_3$ | 10,1 | 0,39 | 26 |
| A9 | 6,25 | 0 | 6,0 | 0,11 | 150 | $Mn_{0,018} Fe_{1,982} O_3$ | 10,0 | 0,39 | 26 |
| A10 | 6,25 | 0 | 6,0 | 0,40 | 150 | $Mn_{0,053} Fe_{1,947} O_3$ | 62,6 | 0,55 | 114 |

[1] Plättchendurchmesser über Laserstrahlbeugungsmessungen mit einem CILAS-Granulometer.

[2] Plättchendicke, aus BET-Oberfläche errechnet.

Beispiel A11

Eine gut gerührte Suspension bestehend aus 55,9 g/l FeOOH mit einer BET-Oberfläche von 42 m²/g, 40,3 g/l NaOH, 31,95 g/l $\gamma \cdot Al_2O_3$ und 1,5 g/l KMnO$_4$ und Wasser wird mit einem Durchsatz von 44 kg/h durch ein beheiztes Druckrohr mit einem inneren Durchmesser von 20 mm gepumpt und dabei innerhalb von 45 min. auf 330 °C erhitzt. Danach wird abgekühlt. Das feste Reaktionsprodukt wird von der alkalischen Lösung abgetrennt, mit heißem Wasser gewaschen und im Trockenschrank bei 110 °C getrocknet.

Das Pigment hat rötlich-violette Farbe, und sehr hohen Glanz. Es fühlt sich seidig weich an und weist dabei stark schmierendes, glänzendes Verhalten auf. Mit Cilas-Laserstrahlbeugungs-Granulometrie wird der mittlere Partikeldurchmesser mit 20,9 $\mu$ bestimmt. Die mittlere Plättchendicke errechnet sich aus Messungen der spezifischen freien Oberfläche (BET) mit 0,25 $\mu$.

Analytische Untersuchungen ergeben Werte von 64,4 % Fe, 3,2 % Al und 0,95 % Mn. Aus Röntgenaufnahmen geht hervor, daß das Produkt einphasig vorliegt und Haematitstruktur aufweist. Das Produkt hat die Farbwerte $L^* = 47,5$, Cab = 12,4 und $H^0 = 34,0$.

Rasterelektronenmikroskopische Aufnahmen bestätigen den Plättchencharakter des Pigmentes. Die Zusammensetzung des Pigmentes errechnet sich mit $Mn_{0,027}Al_{0,184}Fe_{1,789}O_3$.

B) Herstellung der erfindungsgemäßen $Mn_uAl_vFe_{[2-(u+v)]-z}O_{4-z}$-Pigmente

Beispiel B1

50 g des nach Beispiel A1 hergestellten plättchenförmigen Pigmentes werden in einem 2 l-Quarzkolben, der innen mit 4 Produkt-Stolperstufen ausgestattet ist, eingetragen. Der Drehkolben ist mit einem Gas-Einleitungsrohr, welches durch den Kolbenhals geführt ist und 10 cm tief ins Kolbeninnere ragt, versehen. Ein Gasaustragsrohr begleitet das Gaseintragsrohr im Bereich des Kolbenhalses. Der Drehkolben ist fernerhin mit einem Thermofühler zur Messung der Produkttemperatur ausgerüstet.

Der Drehkolben wird in einem aufklappbaren, der Form des Kolbens angepaßten elektrisch beheizten Mantelofen eingebracht und zunächst mit N$_2$ gespült, während der Mantelofen auf die gewünschte

6

Temperatur bei der die Reduktion stattfinden soll, aufgeheizt wird. Über eine thermoelementgesteuerte Regelung wird die Temperatur des Ofens so gefahren, daß die Produkttemperatur während der Reduktionsphase 400 °C ±5 °C beträgt.

Nach Aufheizen der Probe auf die Reduktionstemperatur von 400 °C werden 20 l/h des Reduktionsgases Wasserstoff, der bei 75 °C mit Wasserdampf gesättigt worden ist, in den Kolben eingeführt. Das Gas wird anschließend in den Drehkolben eingeleitet. Die $N_2$-Spülung wird eingestellt.

Die Reduktion wird über eine Dauer von 4 h durchgeführt. Während dieser Zeit wird der Kolben mit einer Umdrehungszahl von 35 U/min im Ofen rotiert. Während der gesamten Reduktionszeit durchströmen 20 l/h $H_2O$-beladenes $H_2$-Gas das Kolbeninnere. Danach wird der Mantelofen abgeschaltet. Das Reaktionsprodukt wird im $H_2O$-beladenen $H_2$-Strom abgekühlt. Es steht nach der Abkühlung ohne weitere Nachbehandlung zur Verfügung.

Das Reaktionsprodukt ist schwarz und zeigt sehr deutlichen Glanz. Rasterelektronenmikroskopische Aufnahmen zeigen, daß der Plättchencharakter des Ausgangspigmentes durch die Reduktion nicht beeinträchtigt wird. Das Produkt fühlt sich, wie das Ausgangsprodukt, seidig weich an und verhält sich stark schmierend. Cilas-granulometrische Messungen ergeben einen mittleren Partikeldurchmesser von 17,5 $\mu$. Röntgenographische Untersuchungen zeigen, daß das Reaktionsprodukt einheitlich kristallisiert und ein Spinellgitter aufweist. Das Pulverdiagramm ist ähnlich demjenigen von Magnetit.

Analytische Untersuchungen ergeben Werte von 1,25 Gew.-% Mn, 2,3 % Al und 68,5 % Fe. Auf der Basis dieser Werte und der Strukturuntersuchung ergibt sich für das Produkt die Formel $Mn_{0,051}Al_{0,192}Fe_{2,757}O_4$.

Beispiele B2 bis B10

Die Beispiele B2 bis B10 werden in Analogie zu Beispiel B1 unter Variation der Reduktionstemperatur, des Reduktionsgases und der Reduktionszeit durchgeführt. Die Reduktionsbedingungen und die Ergebnisse sind in Tabelle 2 zusammengefaßt.

Tabelle 2: Plättchenförmige $Mn_x Al_y Fe_{[3-(x+y)]-z} O_{4-z}$ -Pigmente

| Bei-spiel | Ausgangsprodukt für die Reduktion | Reduktions-gas | $H_2O$-Sättigung bei | Reduktions-temp. | Reduktions-dauer | Zusammensetzung | Struktur | V¹ | Farbe |
|---|---|---|---|---|---|---|---|---|---|
| B2 | $Mn_{0,02} Al_{0,18} Fe_{1,80} O_3$ gemäß Beispiel A2 | $H_2$ | 85 °C | 450 °C | 2 h | $Mn_{0,03} Al_{0,27} Fe_{2,7} O_4$ | Spinell | 10μ | schwarz |
| B3 | $Mn_{0,05} Al_{0,15} Fe_{1,80} O_3$ gemäß Beispiel A3 | $H_2$ | 40 °C | 250 °C | 8 h | $Mn_{0,075} Al_{0,225} Fe_{2,7} O_4$ | Spinell | 31μ | tief-schwarz |
| B4 | $Mn_{0,012} Al_{0,16} Fe_{1,828} O_3$ gemäß Beispiel A4 | $H_2$ | 70 °C | 350 °C | 5 h | $Mn_{0,018} Al_{0,24} Fe_{2,742} O_4$ | Spinell | 8μ | schwarz |
| B5 | $Mn_{0,03} Al_{0,18} Fe_{1,79} O_3$ gemäß Beispiel A5 | $NH_3$ | — | 700 °C | 1 h | $Mn_{0,0225} Al_{0,255} Fe_{2,7225} O_4$ | Spinell | 27μ | grau-schwarz |
| B6 | $Mn_{0,057} Al_{0,14} Fe_{1,803} O_3$ gemäß Beispiel A6 | $H_2$ | 75 °C | 370 °C | 4 h | $Mn_{0,0855} Al_{0,21} Fe_{2,7045} O_4$ | Spinell | 42μ | schwarz |
| B7 | $Mn_{0,02} Al_{0,08} Fe_{1,90} O_3$ gemäß Beispiel A7 | $H_2$ | — | 800 °C | 30' | $Mn_{0,03} Al_{0,12} Fe_{2,85} O_4$ | Spinell | 12μ | schwarz |
| B8 | $Mn_{0,019} Al_{0,005} Fe_{1,976} O_3$ gemäß Beispiel A8 | $H_2$ | + 50 l/h $H_2O$-Dampf | 850 °C | 30' | $Mn_{0,0205} Al_{0,0075} Fe_{2,964} O_4$ | Spinell | 10μ | schwarz |
| B9 | $Mn_{0,018} Fe_{1,982} O_3$ gemäß Beispiel A9 | $CH_4$ | 75 °C | 400 °C | 5 h | $Mn_{0,027} Fe_{2,973} O_4$ | Spinell | 10μ | schwarz |
| B10 | $Mn_{0,053} Fe_{1,947} O_3$ gemäß Beispiel A10 | $H_2$ | 60 °C | 330 °C | 5 h | $Mn_{0,0795} Fe_{2,9205} O_4$ | Spinell | 59μ | tief-schwarz |

¹ Der mittlere Plättchendurchmesser ist über Laserstrahlbeugung mit einem Cilas-Granulometer bestimmt.

Beispiel B11

50 g des in Beispiel B7 hergestellten Produktes werden in der in Beispiel B1 beschriebenen Drehkolbenapparatur bei 20 U/min. unter Stickstoff auf 250 °C aufgeheizt. Dann werden über eine Zeitdauer von 3 h 4 l Luft abgemischt mit 30 l Stickstoff in das Kolbeninnere eingetragen. Danach wird abgekühlt.

Das Produkt ist plättchenförmig wie rasterelektronenmikroskopische Aufnahmen zeigen. Es hat das Röntgendiagramm eines Spinells und zeigt Analysenwerte, die der Formel $Mn_{0,023}Al_{0,093}Fe_{2,22}O_{3,33}$ entsprechen. Es ist schwarzbraun.

**Beispiel B12**

50 g des in Beispiel B9 hergestellten Produktes werden in dem in Beispiel B1 beschriebenen Drehkolben unter Stickstoff auf 270 °C aufgeheizt. Dann werden eine Mischung von 30 l/h $N_2$ und 5 l Luft über eine Zeitdauer von 4 h in den sich mit 30 U/min. drehenden Kolben eingetragen. Danach wird abgekühlt.

Das Produkt ist plättchenförmig was aus rasterelektronenmikroskopischen Aufnahmen hervorgeht. Es hat das Röntgendiagramm eines Spinells und zeigt Analysenwerte die der Formel $Mn_{0,02}Fe_{2,23}O_{3,25}$ entsprechen. Das Pigment ist dunkelbraun.

**Beispiel B13**

50 g des in Beispiel B8 hergestellten Produktes werden in der in Beispiel B1 beschriebenen Drehkolbenapparatur unter Stickstoff auf 250 °C, bei 25 U/min erhitzt. Danach werden eine Mischung aus 20 l/h $N_2$ und 10 l/h Luft über 6 h eingetragen. Danach wird abgekühlt.

Das Produkt zeigt das Röntgendiagramm des Spinells, ist plättchenförmig wie elektromikroskopische Aufnahmen zeigen und weist Analysenwerte auf welche der Zusammensetzung $Mn_{0,019}Al_{0,0052}Fe_{2,066}O_{3,09}$ entsprechen. Das Produkt ist braun.

**Beispiel B14**

50 g des in Beispiel A11 hergestellten Produktes werden in der in Beispiel B1 beschriebenen Reduktionsapparatur in Analogie zu Versuch B1 reduziert, wobei die Reduktionstemperatur 360 °C und die Reduktionsdauer 2,5 h beträgt. Das Reduktionsgas Wasserstoff wird bei 70 °C $H_2O$-dampfgesättigt.

Das erhaltene schwarze Produkt ist plättchenförmig, wie rasterelektronenmikroskopische Aufnahmen zeigen. Cilas-granulometrische Messungen ergeben einen mittleren Partikeldurchmesser von 21,0 $\mu$. Das Röntgendiagramm zeigt Linien des Magnetits und des Haematits. Die Farbwerte des Produktes sind $L^* = 34,8$, Cab = 0,3 und $H^0 = 31,7$.

Die Magnetwerte der Probe sind $H_c = 39,8$ KA/m $M_{m/\phi} = 56$ $nTm^3/g$

$M_{r/\phi} = 19,7$ $nTcm^3/g$.

**Beispiel B15**

50 g des in Beispiel A11 hergestellten Produktes werden in der in Beispiel B1 beschriebenen Reduktionsapparatur in Analogie zu Versuch B1 reduziert, wobei die Reduktionstemperatur 340 °C und die Reduktionsdauer 1 h beträgt. Das Reduktionsgas Wasserstoff wird vorher bei 65 °C $H_2O$-dampfgesättigt.

Das erhaltene Produkt ist plättchenförmig, wie rasterelektronenmikroskopische Aufnahmen zeigen. Cilas-granulometrische Messungen ergeben einen mittleren Partikeldurchmesser von 21,2 $\mu$. Das Röntgendiagramm zeigt Linien des Magnetits und des Haematits. Die Farbwerte des Produktes sind $L^* = 39,2$, Cab = 1,6 und $H^0 = 43,9$.

Die Probe hat die Magnetwerte $H_c = 43,3$ KA/m, $M_{m/\phi} = 23 Tm^3/g$ und $M_{r/\phi} = 9,1 nTm^3/g$. Die elektrische Leitfähigkeit beträgt $1,0 \cdot 10^{-2}$ S/cm

**Beispiel B16**

50 g des in Beispiel A11 hergestellten Produktes werden in der in Beispiel B1 beschriebenen Reduktionsapparatur in Analogie zu Versuch B1 reduziert, wobei die Reduktionstemperatur 250 °C und die Reduktionsdauer 2 h beträgt. Das Reduktionsgas Wasserstoff wird vorher bei 40 °C $H_2O$-dampfgesättigt.

Das erhaltene Produkt ist plättchenförmig, wie rasterelektronenmikroskopische Aufnahmen zeigen.

Cilas-granulometrische Messungen ergeben einen mittleren Partikeldurchmesser von 21,2 $\mu$. Das Röntgendiagramm zeigt Linien des Magnetits und des Haematits. Die Farbwerte des Produktes sind $L^* = 46,3$, Cab $= 10,9$ und $H^0 = 31,1$.

Die Magnetwerte des Produktes sind für die Koerzitivfeldstärke $H_c = 23$ KA/m und Sättigungsmagnetisierung $M_m/\phi = 2nTm^3/g$. In einer Melamin-Lack-Matrix lassen sich die Plättchen durch ein äußeres Magnetfeld ausrichten.

Beispiel B17

50 g des in Beispiel A11 hergestellten Produktes werden in der in Beispiel B1 beschriebenen Reduktionsapparatur in Analogie zu Versuch B1 reduziert, wobei die Reduktionstemperatur 400 °C und die Reduktionsdauer 2 h beträgt. Das Reduktionsgas Wasserstoff wird vorher bei 75 °C $H_2O$-dampfgesättigt.

Das erhaltene Produkt ist plättchenförmig, wie rasterelektronenmikroskopische Aufnahmen zeigen. Cilas-granulometrische Messungen ergeben einen mittleren Partikeldurchmesser von 25,1 $\mu$. Das Röntgendiagramm zeigt neben deutlichen Linien des Magnetits sehr schwache Linien von metallischem Eisen. Die Farbwerte des Produktes sind $L^* = 36,2$, Cab $= 0,5$ und $H^0 = 75,5$.

Die Magnetwerte des Produktes sind $H_c = 35,4$ KA/m, $M_{m/\phi} = 61nTm^3/g$ und $m_{r/\phi} = 19,8nTm^3/g$. Die elektrische Leitfähigkeit beträgt $4,0 \cdot 10^{-1}$ S/cm.

Beispiel B18

30 g des im Versuch B 17 hergestellten Pigmentes werden in 103.8 g wässriger Titanylsulfatlösung, welche 5,2 % Titan und 49,7 % $H_2SO_4$ enthält, eingetragen. Die Suspension wird bei Raumtemperatur tropfenweise mit einer Sodalösung bestehend aus 23,34 g $Na_2CO_3$ und 500 ml $H_2O$ versetzt. Unter Rühren wird bis zum Siedepunkt erhitzt und anschließend 2 Stunden lang gekocht. Danach werden 500 ml 95 °C heißes Wasser über die Dauer von 1 Stunde zugegeben und weiterhin über 1 Stunde bis zum Siedepunkt erhitzt. Anschließend wird abgekühlt. Die mit ausgefallenen Titanoxidhydrat belegten Pigmentplättchen werden abfiltriert, gewaschen und bei 120 °C getrocknet.

Das entstandene Produkt hat violette Farbe, glänzt und zeigt in der Analyse einen Titangehalt von 11,3 %.

Beispiel B19

20 g des in Versuch B 17 hergestellten Pigmentes werden in 100 ml destilliertes Wasser, das eine Temperatur von 75 °C aufweist, eingerührt. Anschließend werden 13 ml einer 10 %igen $AlCl_3 \cdot 6H_2O$ Lösung in Wasser über eine Zeitdauer von 1 h mit so viel wässriger 10 %iger Natronlauge zugesetzt, daß der pH-Wert 5,0 beträgt. Die Suspension wird über eine Stunde gerührt. Danach werden 35 ml einer 40 %igen wässrigen $FeCl_3$-Lösung über 7 Stunden zugegeben. Während dieser Zeit wird der pH-Wert über die Zudosierung von Soda bei 3,5 gehalten. Anschließend werden die Pigmentplättchen filtriert, gewaschen und getrocknet und über 10 min bei 850 ° calcimiert.

Das erhaltene Produkt zeigt eisenoxidbelegte Pigmentflächen. Es hat einen goldenen Farbton.

Beispiel B20

Das in B 17 hergestellte Pigment wird mit Hilfe eines Brabender Laborkneters in einem mit Butadien-Kautschuk modifizierten Styrol-Acrylnitril-Copolymerisat bei 210 °C nach einer Mischzeit von 15 min. eingeknetet. Das Mischungsverhältnis Pigment/Copolymerisat beträgt 1:1.

Aus den homogenen Mischungen werden Platten mit einer Dicke von 2,5 mm gepreßt. Aus den Platten werden Probegehäuse für die EMI-Messungen hergestellt.

Die Messungen zeigen, daß das Pigment eine deutliche Abschirmwirkung aufweist.

**Ansprüche**

1. Plättchenförmige Pigmente auf Basis von Eisenoxid mit Spinellstruktur der Zusammensetzung:

$$Mn_uAl_vFe_{[3-(u+v)]-z}O_{4-z},$$

wobei
u Werte von 0,01 - 0,09,
v Werte von 0 - 0,3 und
z Werte von 0 - 1
haben.

2. Plättchenförmiges Zweiphasenpigment, dadurch gekennzeichnet, daß die Oberflächen Spinellstruktur mit der Zusammensetzung:

$$Mn_uAl_vFe_{[3-(u+v)]-z}O_{4-z}\ aufweisen,$$

wobei
u Werte von 0,01 - 0,09,
v Werte von 0 - 0,3 und
z Werte von 0 - 1
haben,
und der Kern die Struktur von Hematit mit der Zusammensetzung

$$Mn_xAl_yFe_{2-(x+y)}O_3\ aufweist,,$$

wobei
x Werte von 0,01 - 0,06 und
y Werte von 0 - 0,2
haben.

3. Verfahren zur Herstellung der Pigmente nach Anspruch 1, dadurch gekennzeichnet, daß man plättchenförmige Ausgangspigmente mit Hematitstruktur der Zusammensetzung $Mn_xAl_yFe_{2-(x+y)}O_3$, in der x Werte von 0,01 - 0,06 und y Werte von 0 - 0,2 haben, bei erhöhten Temperaturen mit reduzierenden Gasen so lange behandelt, bis die Ausgangspigmente durchreduziert sind.

4. Verfahren zur Herstellung der Pigmente nach Anspruch 2, dadurch gekennzeichnet, daß man plättchenförmige Ausgangspigmente mit Hematitstruktur der Zusammensetzung $Mn_xAl_yFe_{2-(x+y)}O_3$, in der x Werte von 0,01 - 0,06 und y Werte von 0 - 0,2 haben, bei erhöhten Temperaturen mit reduzierenden Gasen behandelt und die Behandlung abbricht, bevor die Ausgangspigmente durchreduziert sind.

5. Verfahren nach den Ansprüchen 3 und 4, dadurch gekennzeichnet, daß man als reduzierende Gase Wasserstoff, Ammoniak, Kohlenmonoxid und/oder Methan einsetzt.

6. Verfahren nach Ansprüchen 3 bis 5, dadurch gekennzeichnet, daß das reduzierende Gas Wasserdampf enthält.

7. Verfahren nach Anspruch 6, dadurch gekannzeichnet, daß das reduzierende Gas Wasserdampf in einer Menge, die der Sättigung bei einer Temperatur von 20 bis 85 °C entspricht, enthält.

8. Verfahren nach Ansprüchen 3 bis 7, dadurch gekennzeichnet, daß man die Behandlung mit dem reduzierenden Gas bei einer Temperatur von 200 bis 1200 °C durchführt.

9. Verfahren nach Ansprüchen 3 bis 8, dadurch gekennzeichnet, daß man anschließend an die Redukton das erhaltene Produkt mit Spinellstruktur der Zusammensetzung $Mn_uAl_vFe_{(3-[u+v])}O_4$ mit sauerstoffhaltigen Gasen oxidiert.

10. Verfahren nach Anspruch 9, dadurch gekennzeichnet, daß das sauerstoffhaltige Gas <20 Vol.% Sauerstoff enthält.

11. Verfahren nach Ansprüchen 9 bis 10, dadurch gekennzeichnet, daß man die Oxidation bei Temperaturen von 150 bis 400° C durchführt.

12. Verwendung von plättchenförmigen Pigmenten nach Ansprüchen 1 und 2 zur Herstellung von dekorativen Beschichtungen, besonders in Lacken, Kunststoffen, Drucken und in der Kosmetik, zur Herstellung von elektromagnetischen Abschirmungen, als Substrat für Beschichtungen und als Pigmente mit magnetischen Eigenschaften.

## Claims

1. A plateletlike pigment based on iron oxide and having a spinel structure of the composition:

$$Mn_uAl_vFe_{[3-(u+v)]-z}O_{4-z},$$

where
u is from 0.01 - 0.09,
v is from 0 - 0.3 and
z is from 0 - 1.

2. A plateletlike two-phase pigment, wherein the surfaces has a spinel structure of the composition:

$$Mn_uAl_vFe_{[3-(u+v)]-z}O_{4-z}$$

where
u is from 0.01 - 0.09,
v is from 0 - 0.3 and
z is from 0 - 1,
and the core has a structure of hematite of the composition

$$Mn_xAl_yFe_{2-(x+y)}O_3$$

where
x is from 0.01 - 0.06 and
y is from 0 - 0.2.

3. A process for producing a pigment as claimed in claim 1, which comprises treating a plateletlike starting pigment having a hematite structure of the composition $Mn_xAl_yFe_{2-(x+y)}O_3$, where x is 0.01 - 0.06 and y is 0 - 0.2, at elevated temperatures with a reducing gas until the starting pigment has been fully reduced.

4. A process for producing a pigment as claimed in claim 2, wherein a plateletlike starting pigment having a hematite structure of the composition $Mn_xAl_yFe_{2-(x+y)}O_3$, where x is 0.01 - 0.06 and y is 0 - 0.2, is treated at elevated temperatures with reducing gas and the treatment is ceased before the starting pigment has been fully reduced.

5. A process as claimed in claim 3 or 4, wherein the reducing gas is hydrogen, ammonium, carbon monoxide and/or methane.

6. A process as claimed in any of claims 3 to 5, wherein the reducing gas contains water vapor.

7. A process as claimed in claim 6, wherein the reducing gas contains water vapor in an amount corresponding to saturation at from 20 to 85° C.

8. A process as claimed in any of claims 3 to 7, wherein the treatment with the reducing gas is carried out at from 200 to 1,200° C.

9. A process a claimed in any of claims 3 to 8, wherein after the reduction the product having a spinel structure of the composition $Mn_uAl_vFe_{(3-[u+v])}O_4$ is oxidized with an oxygen-containing gas.

10. A process as claimed in claim 9, wherein the oxygen-containing gas contains < 20% by volume of oxygen.

11. A process as claimed in claim 9 or 10, wherein the oxidation is carried out at from 150 to 400°C.

12. The use of a plateletlike pigment as claimed in claim 1 or 2 for producing decorative coatings, in particular in paints, plastics, prints and cosmetics, for producing electromagnetic screens, as substrates for coatings and as pigments having magnetic properties.


**Revendications**

1. Pigments en forme de plaquettes à base d'oxyde de fer, ayant une structure de spinelle de composition

$$Mn_uAl_vFe_{[3-(u+v)]-z}O_{4-z},$$

u ayant des valeurs de 0,01 à 0,09
v ayant des valeurs de 0 à 0,3 et
z ayant des valeurs de 0 à 1.

2. Pigment à deux phases en forme de plaquettes, caractérisé en ce que les surfaces présentent des structures de spinelle avec la composition

$$Mn_uAl_vFe_{[3-(u+v)]-z}O_{4-z},$$

u ayant des valeurs de 0,01 à 0,09
v ayant des valeurs de 0 à 0,3 et
z ayant des valeurs de 0 à 1,
et en ce que le noyau présente la structure de l'hématite avec la composition

$$Mn_xAl_yFe_{2-(x+y)}O_3,$$

x ayant des valeurs de 0,01 à 0,06 et
y ayant des valeurs de 0 à 0,2.

3. Procédé de préparation des pigments selon la revendication 1, caractérisé en ce qu'on traite par des gaz réducteurs, à température élevée, des pigments de départ en forme de plaquettes, ayant une structure d'hématite de composition $Mn_xAl_yFe_{2-(x+y)}O_3$, dans laquelle x a des valeurs de 0,01 à 0,06 et y a des valeurs de 0 à 0,2, jusqu'à ce que les pigments de départ soient complètement réduits.

4. Procédé de préparation des pigments selon la revendication 2, caractérisé en ce qu'on traite par des gaz réducteurs, à température élevée, des pigments de départ en forme de plaquettes, ayant une structure d'hématite de composition $Mn_xAl_yFe_{2-(x+y)}O_3$, dans laquelle x a des valeurs de 0,01 à 0,06 et y a des valeurs de 0 à 0,2, et on interrompt le traitement avant que les pigments de départ ne soient complètement réduits.

5. Procédé selon la revendication 3 ou 4, caractérisé en ce qu'on utilise, comme gaz reducteur, de l'hydrogène, de l'ammoniac, du monoxyde de carbone et/ou du méthane.

6. Procédé selon l'une quelconque des revendications 3 à 5, caractérisé en ce que le gaz réducteur contient de la vapeur d'eau.

7. Procédé selon la revendication 6, caractérisé en ce que le gaz réducteur contient de la vapeur d'eau dans une quantité qui correspond à la saturation à une température de 20 à 85°C.

8. Procédé selon l'une quelconque des revendications 3 à 7, caractérisé en ce qu'on conduit le traitement par le gaz réducteur à une température de 200 à 1200° C.

9. Procédé selon l'une quelconque des revendications 3 à 8, caractérisé en ce qu'à la suite de la réduction, on oxyde par des gaz contenant de l'oxygène le produit obtenu à structure de spinelle de composition $Mn_uAl_vFe_{[3-(u+v)]}O_4$,

10. Procédé selon la revendication 9, caractérisé en ce que le gaz contenant de l'oxygène contient moins de 20% en volume d'oxygène.

11. Procédé selon la revendication 9 ou 10, caractérisé en ce qu on conduit l'oxydation à une température de 150 à 400° C.

12. Utilisation de pigments en forme de plaquettes selon la revendication 1 ou 2 pour la confection d'enduits décoratifs, en particulier dans des vernis, des matières plastiques, dans l'impression et la cosmétique, pour la fabrication d'écrans électromagnétiques, comme substrat pour des enduits et comme pigments à propriétés magnétiques.